Europäisches Patentamt

European Patent Office

Office européen des brevets

(11) Publication number: 0 405 117 A2

# (12) EUROPEAN PATENT APPLICATION

(21) Application number: 90109298.1

(22) Date of filing: 17.05.90

(51) Int. Cl.5: H01M 2/30

(30) Priority: 27.06.89 IT 2100489

(43) Date of publication of application:
02.01.91 Bulletin 91/01

(84) Designated Contracting States:
AT BE CH DE DK ES FR GB GR LI LU NL SE

(71) Applicant: AQUILA PIOMBO PER CACCIA E
TIRO S.r.l.
Località Molinazzo 1/3
I-25060 Cellatica Brescia(IT)

(72) Inventor: Scotti, Giorgio
Località Molinazzo
I-25060 Cellatica, (Brescia)(IT)

(74) Representative: Lecce, Giovanni
Dott. Giovanni Lecce & C. S.r.l. Via G. Negri
10 10
I-20123 Milano(IT)

(54) Process for the production of a pole or terminal of electric batteries.

(57) Process for the production of a pole or terminal of electric battery of high power comprising essentially the phases of:
firmly blocking a small metal block (10) between two counterdies (14, 16) equipped with hollows (18, 20) ; and exercising an intense action of pressure at one exposed end of said block until, maintaining the blocking action, said small block (10) is strongly pressed and fills the hollows (18, 20).

Fig. 3

## PROCESS FOR THE PRODUCTION OF A POLE OR TERMINAL OF ELECTRIC BATTERIES.

The present invention refers to a process for the production of a pole or terminal of electric batteries. More in particular, the present invention refers to a process for the production of a pole or terminal of electric batteries of high power.

Different processes are known for the production of a pole or terminal of electric battery. However, the known processes have the drawback of being generally complex, requiring a plurality of operations and long times in the production which have a considerable effect on the costs of this product.

A known process is that generally called "drop-casting". Through this process, however, a pole or terminal is obtained which only initially presents a structure suitable to fulfil the relative needs. With use, however, this pole is subject to sweating of acid from the battery due to the presence of dangerous gross porosities on its surface which permit the emission of the acid.

Another known process is that of "die-casting". As known, it essentially consists in carrying out the casting of a certain quantity of material, necessary for the construction of the pole, under pressure and in a die driven by a press. Also this process, however, presents the drawback described above of the first process so the obtained product is not reliable.

Furthermore, both these traditional processes supply a pro duct which presents some dimensional inaccuracies which have a negative influence on the processing tolerances.

These dimensional inaccuracies of the pole have a negative influence on its application to the cover of the battery. There are, however, difficulties in the present devices for the automatic feed of the poles to the presses for the injection and molding of the covers.

Another drawback of the abovementioned known processes, both that of "drop-casting" and that of "die-casting", derives from the inevitable wait necessary for the piece to cool, which lengthens processing times considerably.

Furthermore, the casting of the material used, generally lead, requires accurate temperature controls to prevent undesired damage of the molecular structure of the metal. This structure, in the pole, in fact, must be integral to guarantee a good operation of the battery. The temperature control must be carried out in cooling phase of the material.

In fact, cooling must be gradual to avoid damaging, also in this case, the molecular structure of the metal, for example to avoid causing strain hardenings of the metal which would weaken the structure of the pole.

Another drawback which takes place using the abovementioned traditional processes consists in an inevitable shrinkage of the metal during the cooling phase of the piece. This shrinkage, due to the relatively large mass of the piece, takes on characteristics incompatible with good operation of the pole.

In fact, the hollow formed by the shrinkage must, after solidification of the piece, subsequently be filled to the brim with other cast metal.

All the abovementioned drawbacks are felt in the case of the production of a normal pole or terminal of electric batteries, but are particularly important in the case of a pole or terminal for electric batteries of high power. In this type of batteries, in fact, the pole is crossed by intense currents and must withstand high stress both in starting phase of the motor and at operating speed of same.

The present invention makes it possible to solve all the above problems of known processes.

According to the present invention, a pole or terminal of electric batteires, in particular of electric batteries of high power, with a conformation reliable and conforming to the required dimensions, an integral molecular structure not affected by the operating methods and a surface free from gross porosities, can be obtained through a process consisting in the following successive phases:
- firmly block a small metal block between two counterdies equipped with hollow in the inner surface, and
- maintaining said blocking action, exercise an intense pressure action at one end of said small metal block until it is pressed between said counterdies and completely fills the hollow of said counterdies with portions of the small block.

Before the blocking phase, the small metal block may be pre-heated to a temperature suitable to facilitate its plastic deformation.

The process according to the present invention and the relevant advantages obtainable can be better understood from the following detailed description of a constructive form, made with reference to the enclosed drawings, in which:

fig. 1 is an exploded schematic view showing the first preliminary operation of the process according to the invention;

fig. 2 is a schematic view of a section of fig. 1 with a plane passing along line II-II of the same figure;

fig. 3 is a partially sectioned schematic view showing the first operative phase of the process according to the invention;

fig. 4 is a partially sectioned schematic view showing the second operative phase of the process according to the invention, and

fig. 5 shows two perspective schematic views, partially sectioned and 90° apart, of a battery pole obtained with the process according to the invention.

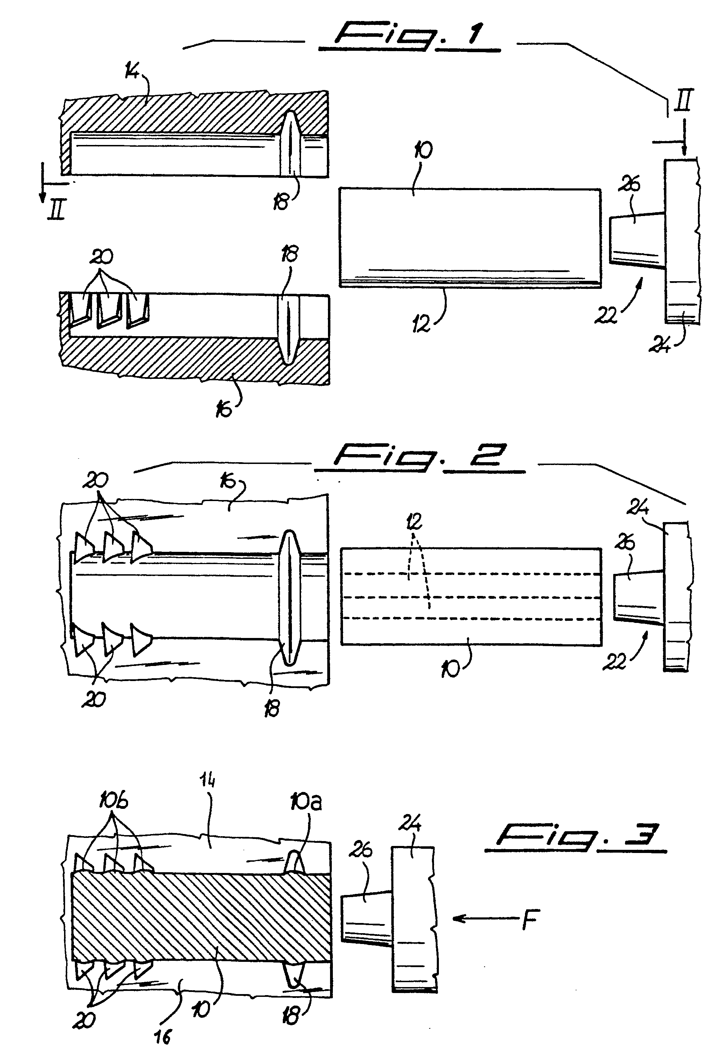

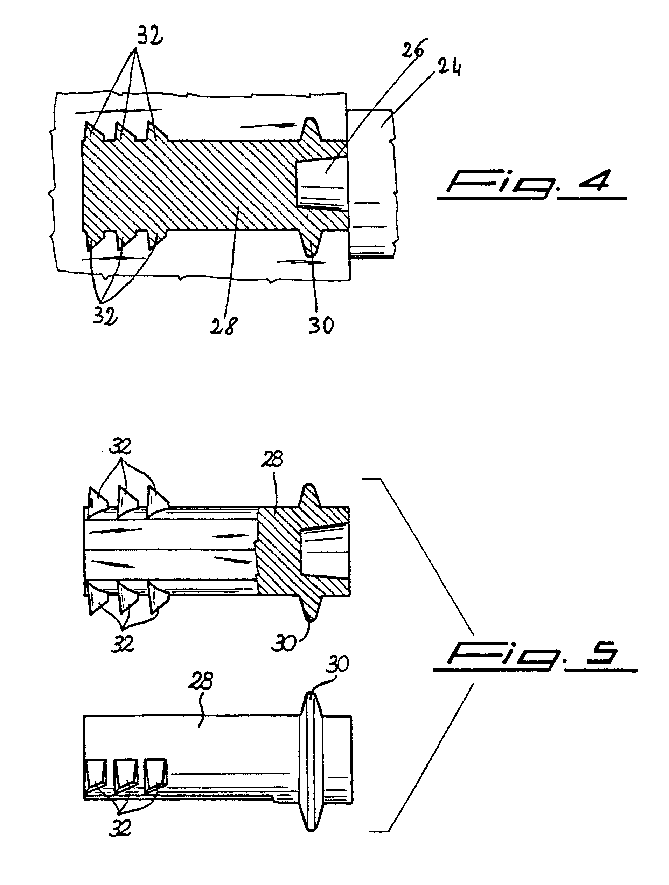

In figs. 1 and 2 a small metal block 10 is illustrated, generally in lead, with substantially cylindrical shape and preferably equipped, along two generatrixes, with two inclined planes or portions 12 forming between them an obtuse angle. Said planes 12 give said small block 10, substantially for its entire length, a wedge shape.

This shape of the small block 10 is preferably provided as centering means, to prevent possible rotations of said small block during the forming process of the pole, which would have a negative influence on its shape.

The die is formed by two counterdies 14 and 16 which form one of the possible forms of realization of the process according to the invention.

Both the counterdies 14 and 16 are equipped, at one of their ends, with a shaped hollow 18 which extends from one side to the other of each counterdie, so that, when the counterdies 14 and 16 are placed side by side, a substantially anular hollow will be formed.

In the illustrative constructive form, said anular hollow has an essentially triangular cross-section.

One of the counterdies, 16, is equipped, at its end opposite that of the hollow 18, with six hollows 20: three of them obtained along a first generatrix of the counterdie 16 and the other three along a second generatrix substantially 180° from the first.

The hollows 20 extend along the inner countour of the counterdie 16, for a prefixed angle of amplitude, and, in the illustrative constructive form, present a cross-section with essentially trapezoidal or "toothed" form.

For the realization of the process according to the invention, besides the counterdies 14 and 16, a punch 22 is also provided. Said punch 22 substantially comprises a base body 24 and an appendix 26, with an essentially truncated conic section, which projects from said body 24. During the forming process, said appendix 26 is engaged with the small metal block 10 to form, together with the action of the counterdies 14 and 16, the battery terminal.

Both the counterdies 14 and 16 and the punch 22 can preferably be associated with and driven by a conventional press (not shown in the drawings)-,equipped with means of control for the operation in succession of the abovementioned counterdies 14 and 16 and of the punch 22 for the realization of the process according to the invention.

Also the small block 10 can preferably be associated with means of support and guide (not shown) for its support and insertion between the counterdies 14 and 16.

The process according to the invention comprises a first operative phase, schematically shown in fig. 3. In this first phase, which is carried out by first inserting the small block 10 between the counterdies 14 and 16 then placing the latter side by side with a prefixed force of intensity.

The cross-section of the small metal block 10 is preferably larger than that of the inner hollow bordered by the counterdies 14 and 16, so that, as shown in particular in fig. 3, some portions 10a and 10b of the small block 10 start insert serting themselves respectively in the hollows 18 and 20 of the counterdies 14 and 16.

This start of cold plastic deformation of the small block 10 is particularly advantageous for the realization of the second operative phase of the process according to the invention as it constitutes an "invitation" to the completion of the formation of the battery pole.

While the blocking action of the small block 10 is maintained, the punch 22 is made move forward in the direction of the arrow F of fig. 3 so that its appendix 26 is engaged with the small block 10, in particular with its end or portion in view from the counterdies 14 and 16.

The particularly intense pressure action exercised by the appendix 26 on the small metal block 10 is so strong that it causes a further cold plastic deformation of the srall metal block 10 so that its portions 10a and 10b completely fill respectively the hollows 18 and 20 of the counterdies 14 and 16. In this way the battery pole takes on its final conformation shown in fig. 5 in two different views respectively 90° apart. In order to encourage the plastic deformation of the small block 20, the two operative phases of the process according to the invention may be preceded by a preliminary phase of a limited preheating of the small block which may reduce the amount of strain necessary to obtain the initial and completing deformations.

The terminated battery pole aill be extracted from the press moving the punch 22 back then moving the counteries 14 and 16 apart.

The battery pole, shown in a constructive form in fig. 5, consists in an essentially cylindrical body 28 equipped, at one end, with an essentially anular rib 30, and, at the other end, with two series of three shaped projections 32 extending on the countour of the pole for an angle of amplitude determined by that of the hollow 20 of the counterdies 14 and 16.

From what has been described above, the advantages of the process according to the invention are evident; these derive mainly, even if not exclusively, from the execution of only two operative phases which involve extremely reduced processing times.

The battery pole obtained through the process according to the invention presents a reliable conformation conforming to the required dimensions and its molecular structure is not influenced by the operative methods of the process in question.

Although the invention has been described in conjucntion with specific embodiment, it is evident that many alternatives and variations will be apparent to those skilled in the art in light of the foregoing description. Accordingly, the invention is in tended to embrace all of the altenatives and variations that fall within the spirit and scope of the inventions.

## Claims

1) Process for the production of a pole or terminal of electric batteries, in particular of electric batteries of high power, characterized by the fact of consisting essentially in the following successive phases:
- firmly blocking a small metal block (10) between two counterdies (14, 16) equipped with hollows (18, 20) on the inner surface, and
- maintaining said blocking action, simultaneously exercising an intense action of pressure on one exposed end of said small metal block (10) until it is pressed between said counterdies (14), (16) and completely fills the hollows (18, 20) of said counterdies (14, 16) with portions (10a, 10b) of said small block (10).

2) Process according to claim 1, in which the cross-section of the small metal block (10) is slightly larger than that of the the inner hollow bordered by the counterdies (14, 16).

3) Process according to claim 1 or 2, in which the pressure phase of the small metal block (10) is preceded by a phase of pretensioning of same obtained through the counterdies (14), (16), through the action of which portions (10a, 10b) of the small block (10) partially fill the hollows (18, 20) of the counterdies (14, 16).

4) Process according to any of the previous claims 1 to 3, characterized by the fact of comprising a preliminary pre-heating phase of the small block (10) up to a temperature suitable to facilitate its plastic deformation.

5) Process according to any of the previous claims 1 to 4, characterized by the fact that the pressure action on the exposed end of the small block is exercised by an appendix (26) with truncated-conic section of a punch (22).

6) Process according to any of the previous claims 1 to 5, in which the small metal block (10) has cylindrical section and is equipped, along two generatrixes, with two inclined planes or portions (12) forming between them an obtuse angle.

7) Process according to any of the previous claims 1 to 6, in which the counterdies (14, 16) are equipped, at one of their ends, with a hollow (18) which extends from one side to the other of each counterdie, and one (16) of said counterdies is equipped, at the end opposite that of the hollow (18), with six further hollows (20): three of them along a first generatrix of the counterdie and the other three along a second generatrix placed 180° from the first.

8) Process according to claim 7, in which the hollow (18) has a cross-section with trapezoidal or "toothed" form.

9) Pole or terminal of electric batteries obtainable according to the process indicated in one of the previous claims 1 to 8, comprising a cylindrical body (28) equipped, at one end, with an anular rib (30), and, at the other end, with two series of three shaped projections (32), said series being obtained on two different generatrixes placed 180° apart.

## _Fig.1_

## _Fig.2_

## _Fig.3_

32
26
24

*Fig. 4*

32          28    30

32
28

30
32

28          30
32

*Fig. 5*

6